# EUROPEAN PATENT SPECIFICATION

(11) **EP 1 783 405 B1**
(45) Date of publication and mention of the grant of the patent: **27.03.2013**
(21) Application number: 05751382.2
(22) Date of filing: 16.06.2005
(51) Int. Cl.: F16J 15/32, F16C 33/78

(54) **SEALING DEVICE**
DICHTUNGSVORRICHTUNG
DISPOSITIF D'ÉTANCHÉITÉ

(30) Priority: 16.07.2004 JP 2004209325
(43) Date of publication of application: 09.05.2007
(73) Proprietor: NOK Corporation, Minato-ku Tokyo 105-8585 (JP)
(72) Inventor: MATSUI, Hiroki, NOK CORPORATION, Fukushima-shi, Fukushima 960-1102 (JP); KANZAKI, Go, NOK CORPORATION, Fukushima-shi, Fukushima 960-1102 (JP)
(74) Representative: TBK
(86) International application number: PCT/JP2005/011016
(87) International publication number: WO 2006/008898

(56) References cited:
- EP-A1- 1 277 978
- JP-A- 2001 165 179
- JP-A- 2003 025 442
- JP-U- H0 162 903
- JP-U- 61 134 404
- US-A- 5 215 387

## Description

The present invention relates to a sealing device according to a sealing technique. The sealing device is used as a hub seal (a seal for a hub bearing) in a field of a motor vehicle.

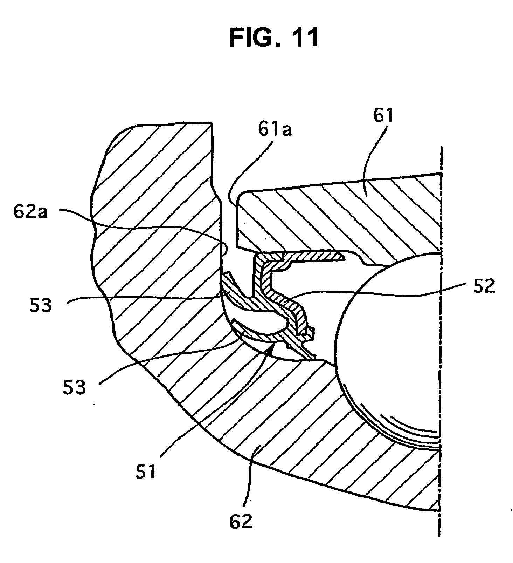

Conventionally, a sealing device 51 illustrated in Fig. 11 has been known. The sealing device 51 seals between an outer race 61 in a bearing, which is a seal housing, and a rotary shaft 62 which is a relative rotation member and has an end face part 62a opposed to an axial end face 61a of the outer race 61. The sealing device 51 includes a sealing member (inner peripheral side sealing member) 52, which is fitted to the inner peripheral side of the outer race 61 so as to be slidably tight contacted with the end face part 62a of the rotary shaft 62 by a plurality of side lips 53 (refer to Japanese Patent Application Laid Open No. 9-287619).

However, as for the conventional sealing device 51, the axial end face part 61a of the outer race 61 does not have a seal function at all. So, when an external foreign matter such as muddy water is adhered to the end face 61a of the outer race 61 made of a metal material, rusting occurs on the end face 61a. The rusting occurred on the end face 61a of the outer race 61 is grown up to an inner peripheral face of the outer race 61 so as to deteriorate a metal fitted part of the outer race 61 and the sealing member 52. As result of this, sealing property of the metal fitted part is bad influenced. Further, the rusting occurred in the end face 61a of the outer race 61 may be transferred to the end face part 62a of the rotary shaft 62 closely opposed to the end face 61a. If, the rusting is transferred, wear of the side lips 53 of the sealing member 52 is progressed. As a result of this, seal property of the end face part is bad influenced.

Documents JP 61 134404 U (D1), JP H01 62903 U (D2) and US 5 215 387 (D3) disclose respectively sealing devices according to the preamble of claim 1.

It is the object of the invention to provide a sealing device in which occurrence of rusting on an axial end face of a housing such as the outer race or the like, to which the sealing device is fitted, is effectively suppressed so that deterioration of a fixedly fitted part and slide movement wear of a seal lip due to rust can be prevented.

The object of the invention is achieved by a sealing device according to claim 1. Advantageous embodiments are performed according to the dependent claims.

According to the present invention, a sealing device, which is for sealing between an outer race of a bearing part in a wheel suspension system for a motor vehicle and a rotary shaft having an axial end face part opposed to an axial end face of the outer race, comprises an outer peripheral side sealing member provided on the outer peripheral side of the outer race, wherein the outer peripheral side sealing member integrally comprises a fixed part fixed on the outer peripheral side of the outer race, an end face rust-preventive seal part for covering the axial end face of the outer race, and an outer peripheral side seal lip part provided on the outer peripheral side of the end face rust-preventive seal part adapted to extend outwards toward the axial end face part of the rotary shaft so as to perform a seal function. The sealing device can further compris an inner peripheral side sealing member provided on the inner peripheral side of the outer race, wherein the outer peripheral side sealing member can integrally compris an outer peripheral side seal lip part which is assembled with a rotary shaft so as to perform a seal function, wherein the inner peripheral side sealing member integrally comprises a fixed part fixed on the inner peripheral side of the outer race and an inner peripheral side seal lip part so as to perform a seal function, and the end face rust-preventive seal part can be adapted for covering an axial end face of the outer race and a tight contacted seal part which is tight contacted with another sealing member so as to seal between the both sealing members.

The sealing device can further comprise an inner peripheral side sealing member provided on the inner peripheral side of the outer race, wherein the inner peripheral side sealing member integrally comprises a fixed part fixed on the inner peripheral side of the outer race.

The end face rust-preventive seal part can extended in a hood shape on the outer peripheral side of an axial end face of the outer race.

According to the sealing device of the present invention, the outer peripheral side sealing member provided on the outer peripheral side of the outer race includes the end face rust-preventive seal part. The seal part covers the axial end face of the outer race so as to prevent adhesion of moisture to the axial end face of the outer race. The outer peripheral side sealing member also includes the outer peripheral side seal lip part which is assembled with the rotary shaft so as to perform a seal function. Thus, foreign matter such as moisture or the like can be sealed by the outer peripheral side seal lip part.

Any one of the outer peripheral side sealing member provided on the outer peripheral side of the outer race and the inner peripheral side sealing member provided on the inner peripheral side of the outer race can include the end face rust-preventive seal part. The seal part covers the axial end face of the outer race so as to prevent adhesion of moisture to the axial end face of the outer race. The outer peripheral side sealing member includes the outer peripheral side seal lip part which is assembled with the rotary shaft so as to perform a seal function. Thus, foreign matter such as the moisture or the like can be sealed by the outer peripheral side seal lip part. Further, one of the sealing members includes the tight contacted seal part which is tight contacted with another sealing member so as to seal between the both sealing members. Thus, the both sealing members can be sealed by the tight contacted seal part. The inner peripheral side seal lip part provided on the inner peripheral side sealing member performs a function as a basic dust lip.

The inner peripheral side sealing member provided on the inner peripheral side of the outer race can include the end face rust-preventive seal part. The seal part covers the axial en face of the outer race so as to prevent adhesion of moisture to the axial end face of the outer race. The inner peripheral side sealing member also includes the outer peripheral side seal lip part which is assembled with the rotary shaft so as to perform a seal function. Thus, foreign matter such as moisture or the like can be sealed by the outer peripheral side seal lip part.

The outer peripheral side sealing member provided on the outer peripheral side of the outer race can include the end face rust-preventive seal part. The seal part is extended in a hood shape on the outer peripheral side of the axial end face of the outer race, so as to prevent adhesion of moisture to the axial end face of the outer race. The outer peripheral side sealing member also includes the outer peripheral side seal lip part which is assembled with the rotary shaft so as to perform a seal function. Thus, foreign matter such as moisture or the like can be sealed by the outer peripheral side seal lip part.

The following effects can be obtained by the present invention.

In the sealing device of the present invention, the outer peripheral side sealing member provided on the outer peripheral side of the outer race includes the end face rust-preventive seal part. The end face rust-preventive seal part covers the axial end face of the outer race, so as to prevent occurrence of rusting by adhesion of moisture to the axial end face. Further, the outer peripheral side sealing member also includes the outer peripheral side seal lip part which is assembled with the rotary shaft so as to perform a seal function. Thus, a foreign matter such as moisture or the like can be sealed by the seal lip part. Since the device has a plural step sealing structure including the seal part and the seal lip part, occurrence of rusting by adhesion of moisture to the outer race end face can be more effectively prevented.

Further, any one of the outer peripheral side sealing member provided on the outer peripheral side of the outer race and the inner peripheral side sealing member provided on the inner peripheral side of the outer race can include the end face rust-preventive seal part. The seal part covers the axial end face of the outer race so as to prevent occurrence of rusting by adhesion of moisture to the axial end face. The outer peripheral side sealing member also includes the outer peripheral side seal lip part which is assembled with the rotary shaft so as to perform a seal function. Thus, a foreign matter such as moisture or the like can be sealed by the seal lip part. Further, one of the sealing members also includes the tight contacted seal part which is tight contacted with another sealing member so as to seal between the both sealing members. Thus, the both sealing members can be sealed by the tight contacted seal part. Since the device has a plural step sealing structure including the seal part, the seal lip part and the tight contacted seal part, occurrence of rusting by adhesion of moisture to the outer race end face can be more effectively prevented.

Further, the inner peripheral side sealing member provided on the inner peripheral side of the outer race can include the end face rust-preventive seal part. The end face rust-preventive seal part covers the axial end face of the outer race so as to prevent occurrence of rusting by adhesion of moisture to the axial end face. The inner peripheral side sealing member also includes the outer peripheral side seal lip part which is assembled with the rotary shaft so as to perform a seal function. Thus, foreign matter such as moisture or the like can be sealed by the outer peripheral side seal lip part. Since the device has a plural step sealing structure including the seal part and the seal lip part, occurrence of rusting by adhesion of moisture to the outer race end face can be more effectively prevented.

Further, the outer peripheral side sealing member provided on the outer peripheral side of the outer race can include the end face rust-preventive seal part. The end face rust-preventive seal part is extended in a hood shape on the outer peripheral side of the axial end face of the outer race, so as to prevent occurrence of rusting by adhesion of moisture to the axial end face of the outer race. The outer peripheral side sealing member also includes the outer peripheral side seal lip part which is assembled with the rotary shaft so as to perform a seal function. Thus, foreign matter such as moisture or the like can be sealed by the outer peripheral side seal lip part. Since the device has a plural step sealing structure including the seal part and the seal lip part, occurrence of rusting by adhesion of moisture to the outer race end face can be more effectively prevented.

### BRIEF EXPLANATION OF DRAWINGS

Fig. 1 is a cross-sectional view of main parts of a sealing device according to a first example of the present invention.
Fig. 2 is a cross-sectional view of main parts of a sealing device according to a second example of the present invention.
Fig. 3 is a cross-sectional view of main parts of a sealing device according to a third example of the present invention.
Fig. 4 is a cross-sectional view of main parts of a sealing device according to a fourth example of the present invention.
Fig. 5 is a cross-sectional view of main parts of a sealing device according to a fifth example of the present invention.
Fig. 6 is a cross-sectional view of main parts of a sealing device according to a sixth example of the present invention.
Fig. 7 is a cross-sectional view of main parts of a sealing device according to a seventh example of the present invention.
Fig. 8 is a cross-sectional view of main parts of a sealing device according to an eighth example of the present invention.
Fig. 9 is a cross-sectional view of main parts of a sealing device according to a ninth example of the present invention.
Fig. 10 is a cross-sectional view of main parts of a sealing device according to a tenth example of the present invention.
Fig. 11 is a cross-sectional view of main parts of a sealing device according to a conventional example.

### Explanation of the Reference Numerals

- 1: sealing device
- 2: inner peripheral side sealing member
- 3: outer peripheral side sealing member
- 4, 8: fixed part
- 5, 10: seal lip part
- 6, 12: metal ring
- 6a, 12a, 14a: cylindrical part
- 6b, 12b, 12c, 14b: flange part
- 6c: inclination face part
- 7, 13: elastic body
- 7a, 13a, 13b: stationary seal part
- 7b, 13b, 13c, 13g, 13h, 13k, 13m: fitted part
- 13n: hoot part
- 13p: chamfer
- 7c,7d,7e,7f,7g: seal lip
- 9: end face rust-preventive seal part
- 11: seal
- 13e: radial raising part
- 13f: lip part
- 13i: extension part
- 13j: tight contacted seal part
- 14: slinger (relative rotation member)
- 21: outer race (bearing)
- 21a: axial end face (relative rotation member)
- 22: rotary shaft
- 22a: axial end face part
- 22b: peripheral face part
- A: outer side of bearing
- B: inner side of bearing

In addition, the present invention includes the following embodiment.
(A) A sealing device, which is for sealing between a housing such as an outer race or the like of a bearing and another member such as a rotary shaft or the like having an end face opposite to an end face of the housing, comprises an inner peripheral side sealing member, which is fitted on the inner peripheral side of the housing and slidably tight contacted with the end face part of the other member by a side lip, wherein the sealing device also comprises an outer peripheral side sealing member, which is fittedon the outer peripheral side of the housing, covers the end face of the housing by a covering part, and is assembled with the end face part of the other member by a lip part, so as to constitute a non-contact type or contact type seal.
   According to the sealing device described in the above (A), the outer peripheral side sealing member is assembled with the inner peripheral side sealing member, so as to cover the end face of the housing by the covering part which is included in this outer peripheral side sealing member. So, adhesion of moisture to the end face of the housing can be suppressed, so as to prevent occurrence of rusting of the end face. Further, the outer peripheral side sealing member is assembled with the end face part of the other member by the lip part thereof so as to constitute the non-contact type or contact type seal. Thus, a primary seal is constituted with the non-contact type or contact type seal, so as to constitute the sealing device in which moisture is hardly invaded into the inside thereof. Since moisture is hardly invaded, occurrence of rusting can be more effectively suppressed, and seal property, which is an original function of the sealing device (for example, a function not for invading muddy water into a bearing in a hub seal), can be enhanced. Therefore, when the device includes a metal fitted part, deterioration of the metal fitted part and the slide movement wear of a side lip due to rust of the end face of the housing can be effectively suppressed. So, the sealing device having more excellent seal property can be provided.
(B) In the sealing device described in the above (A), a tight contacted seal part is provided on the inner peripheral side of the covering part of the outer peripheral side sealing member, where the tight contacted seal part is tight contacted with the inner peripheral side sealing member so as to seal between the both sealing members.
   According to the sealing device described in the above (B), the tight contacted seal part is provided on the inner peripheral side of the covering part of the outer peripheral side sealing member, where the tight contacted seal part is tight contacted with the inner peripheral side sealing member so as to seal between the both sealing members. So, by the seal function of the tight contacted seal part, invasion of moisture from the part between the both sealing members into the housing can be suppressed. Therefore, occurrence of rusting of the housing can be effectively prevented by suppressing of invasion of moisture from the part between the both sealing members into the housing.
(C) An outer peripheral side sealing member is used for the sealing device for sealing between a housing such as an outer race or the like of a bearing and another member such as a rotary shaft or the like having an end face which is opposite to an end face of the housing. The outer peripheral side sealing member is assembled with an inner peripheral side sealing member, which is fitted on the inner peripheral side of the housing so as to be slidably tight contacted with an end face part of the other member by a slide lip. The outer peripheral side sealing member is fitted on the outer peripheral side of the housing so as to cover the end face of the housing by a covering part, and is assembled with an end face part of the other member by a lip part, so as to constitute a non-contact type or contact type seal.
   According to the sealing device described in the above (C), since the end face of the housing is covered by the covering part, adhesion of moisture to the end face of the housing can be suppressed, so that occurrence of rusting of the end face can be prevented. Further, since the outer peripheral side sealing member is assembled with the end face part of the other member by the lip part so as to constitute the non-contact type or contact type seal, a primary seal can be constituted by the non-contact type or contact type seal, so as to constitute a sealing device in which moisture is hardly invaded into the housing. Since moisture is hardly invaded, occurrence of rusting can be more effectively prevented, and seal property which is an original function of the sealing device, can be enhanced. Therefore, the desired objective can be realized, that is, when the sealing device includes the metal fitted part, deterioration of the metal fitted part and the slide movement wear of a side lip due to rust of the end face of the housing can be effectively prevented. So, the sealing device having more excellent seal property can be provided.
(D) In the sealing device described in the above (C), a tight contacted seal part is provided on the inner peripheral side of the covering part, where the tight contacted seal part is tight contacted with the inner peripheral side sealing member so as to seal the both sealing members.
   According to the sealing device described in the above (D), the tight contacted seal part is provided on the inner peripheral side of the covering part, where the tight contacted seal part is tight contacted with the inner peripheral side sealing member so as to seal the both sealing members. Thus, by the seal function of the tight contacted seal part, invasion of moisture from the part between the both sealing members into the housing can be suppressed. Therefore, occurrence of rusting of the housing can be effectively prevented by suppressing of invasion of moisture from the part between the both sealing members into the housing.
(E) An end face part of another shaft and a housing (outer race) face are metal faces each other. Thus, since occurrence of rusting on one side is transferred to another side face, occurrence of rusting may be progressed. In order to avoid this problem, a labyrinth seal is fitted to an outer peripheral part of the outer race. The labyrinth seal is extended in the outer peripheral direction of a flange face of the shaft so as to make a labyrinth structure with an R part of the shaft and a rubber lip part, so that invasion of water can be suppressed. A fitted part with the housing is formed by fitting a metal and a rubber, and a metal ring is made not to be exposed at the time of mounting in order not to occur rusting. Further, in order to suppress occurrence of rusting of the shaft end face and the housing end face, the housing end face part is formed to be covered with the rubber. Further, a chamfer part of the housing is formed to be covered in order not to expose the metal as much as possible. When the top end of the covering part is formed in a lip shape to contact with an end face of an inner side seal, no space is made. According to the above-described constitution, since the rusting progression can be lessened, the seal life can be increased. Further, muddy water resistance and dust resistance can be expected to be increased by the labyrinth structure. In addition, a contact type seal can be used instead of the labyrinth seal.

### Example

Hereinafter, examples of the present invention will be described with drawings.

All of the sealing devices 1 according to examples described below are used as a hub seal to a bearing part (a seal for a hub bearing) in a wheel suspension system for a motor vehicle. The sealing devices 1 are to prevent the invasion of foreign matters such as dusts, moisture and the like of a bearing external part A into a bearing internal part B, and to prevent the leakage of a lubrication grease of the bearing internal part B toward the bearing external part A.

### First Example

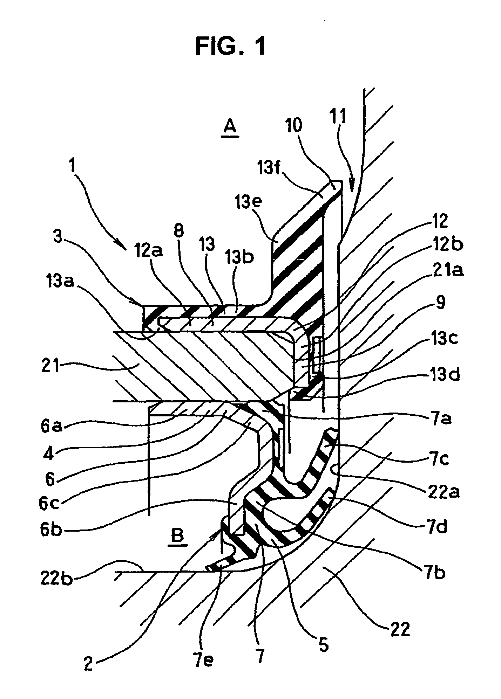

Fig. 1 is a cross-sectional view of main parts of a sealing device 1 according to a first example of the present invention. This example is according to the inventions of the first, second and fourth aspects.

The sealing device 1 according to this first example is for sealing between an outer race (an outer ring, a housing) 21 in the baring part and a rotary shaft (a relative rotation member) 22 having an axial end face part 22a, which is opposed to an end face (an axial end face) 21a in one axial direction (the right direction in the drawings, it is the same direction hereinafter) of the outer race 21. The sealing device 1 includes an inner peripheral side sealing member 2 fitted on the inner peripheral side of the outer race 21, and an outer peripheral side sealing member 3 which is fitted on the outer peripheral side of the outer race 21 and assembled with the inner peripheral side sealing member 2. The outer race 21 is made of a metal material, and a function of the sealing device 1 is to prevent the occurrence of rusting of the axial end face 21a of the outer race 21. The both sealing members 2 and 3 are constituted as follows.

The inner peripheral side sealing member 2 integrally includes a fixed part 4 fixed at the outer race 21, and a seal lip part 5 which is slidably contacted with the rotary shaft 22, as constitution elements. Further, the inner peripheral side sealing member 3 includes a metal ring 6 fitted on the inner peripheral side of the outer race 21 and a rubber like elastic body 7 which is bonded (bonded by vulcanization) to the metal ring 6, as constitution members.

The metal ring 6 integrally includes a cylindrical part 6a fitted on an inner peripheral face of the outer race 21, and a flange part 6b which is integrally formed with an end part in one axial direction of the cylindrical part 6a toward an inner radial direction. A tapered inclination face part 6c is integrally formed between the cylindrical part 6a and the flange part 6b.

The rubber like elastic body 7 integrally includes a stationary seal part 7a which is fitted to an outer peripheral face of the inclination face part 6c of the metal ring 6 and is tight contacted with the inner peripheral face of the outer race 21 so as to seal the inclination end face 6c, and a fitted part 7b fitted to an outer end face and an inner end face of the flange part 6b of the metal ring 6. The fitted part 7b is integrally formed with a first seal lip (an outer peripheral side lip) 7c which is slidably tight contacted with the axial end face part 22a of the rotary shaft 22 so as to seal the axial end face part 22a, a second seal lip (an inner peripheral side lip) 7d which is provided on the inner peripheral side of the first seal lip 7c and is slidably tight contacted with the axial end face part 22a of the rotary shaft 22 so as to seal the axial end face part 22a, and a third seal lip (a radial lip) 7e which is slidably tight contacted with a peripheral face part 22b of the rotary shaft 22 so as to seal the peripheral face part 22b. The first and second seal lips 7c and 7d are directed toward the outer side A of the bearing so as to mainly seal the dusts. The third seal lip 7e is directed toward the inner side B of the bearing so as to mainly seal the grease.

On the other hand, the outer peripheral side sealing member 3 integrally includes a fixed part 8 fixed at the outer race 21, an end face rust-preventive seal part (a covering part) 9 for covering the axial end face 21a of the outer race 21, and a seal lip part 10 which is provided on the outer peripheral side of the end face rust-preventive seal part, and is assembled with the rotary shaft 22 so as to form a seal 11. Further, the outer peripheral side sealing member 3 includes a metal ring 12 fitted on the outer peripheral side of the outer race 21, and a rubber like elastic body 13 attached to the metal ring 12, as constitution members.

The metal ring 12 integrally includes a cylindrical part 12a fitted on the outer peripheral face of the outer race 21 and a flange part 12b integrally formed with an end face in one axial direction of the cylindrical part 12a toward an inner radial direction. The flange part 12b has a radial length capable of covering the axial end face 21a of the outer race 21.

The rubber like elastic body 13 integrally includes a stationary seal part 13a which is fitted to an end part in another axial direction (the left direction in the drawings, it is the same direction hereinafter) of the cylindrical part 12a of the metal ring 12, and is tight contacted with the outer peripheral face of the outer race 21 so as to seal the cylindrical part 12a, an outer peripheral fitted part 13b fitted to the outer peripheral face of the cylindrical part 12a of the metal ring 12, an end face fitted part 13c fitted to the outer side end face of the flange part 12b of the metal ring 12, and a stationary seal part 13d which is fitted to an inner peripheral end part of the flange part 12b and is directly tight contacted with the inner peripheral part of the axial end face 21a of the outer race 21 so as to seal the flange part 12b. Further, a flange shaped radial raising part 13e is integrally formed between the fitted parts 13b and 13c toward an outer radial direction. Further, a lip part 13f is integrally formed with an outer peripheral end part of the radial raising part 13e toward the axial end face part 22a of the rotary shaft, which is an outer aslant direction.

The flange part 12b of the metal ring 12, and the fitted part 13c and the stationary seal part 13d of the rubber like elastic body 13 cover the axial end face 21a of the outer race 21 so as to seal moisture, and constitute an end face rust-preventive seal part 9, which is to prevent occurrence of rusting of the axial end face 21a by preventing adhesion of moisture to the axial end face 21a of the outer race 21. Further, the seal lip part 10 and the lip part 13f are not contacted with but provided close to the axial end face part 22a of the rotary shaft 22, so as to constitute a labyrinth seal 11 which is a non-contact type seal.

The sealing device 1 having the above-described constitution is used as the hub seal as described above, and is for sealing muddy water or the like of the bearing external part A so as not to invade into the bearing internal part B. Further, the sealing device 1 has the following operation effects with the above-described constitution.

The above-described sealing device 1 is formed by assembling the inner peripheral side sealing member 2 with the outer peripheral side sealing member 3. The outer peripheral side sealing member 3 is fitted on the outer peripheral side of the outer race 21 and covers the whole face of the axial end face 21a of the outer race 21 at the end face rust-preventive seal part 9. Further, the labyrinth seal 11 is formed between the outer peripheral side sealing member 3 and the axial end face part 22a of the rotary shaft 22 by the seal lip part 10 or the lip part 13f. Therefore, the axial end face 21a of the outer race 21 is covered with the end face rust-preventive part 9, so as to suppress adhesion of moisture to the axial end face 21a. Thus, occurrence of rusting of the axial end face 21a can be prevented.

Further, since the labyrinth seal 11 is formed by the seal lip part 10 or the lip part 13f between the part 10 or 13f and the axial end face part 22a of the rotary shaft 22, the labyrinth seal 11 acts as a primary seal. Thus, the sealing device 1 in which external moisture hardly invades into a bearing can be constituted. If moisture hardly invades, occurrence of rusting can be more effectively prevented, and the dust seal function which is the original function of the sealing device 1 can be enhanced. Therefore, the sealing device 1 having the function effects of the desired objective can be provided.

In addition, in the first example, the end face rust-preventive seal part 9 is formed by assembling the metal ring 12 and the rubber like elastic body 13. However, the end face rust-preventive seal part 9 can be formed by any one of the metal ring 12 and the rubber like elastic body 13. Further, the seal lip part 10 or the lip part 13f is assembled with the rotary shaft 22 so as to constitute the non-contact type labyrinth seal 11. However, a contact type (a sliding type) seal may be constituted.

### Second example

As for the inner peripheral side sealing member 2, the seal lip part 5 is directly fixed at the rotary shaft 22. However, the seal lip part 5 can be slidably tight contacted with a member fixed at the rotary shaft 22, for example, a metal ring (slinger).

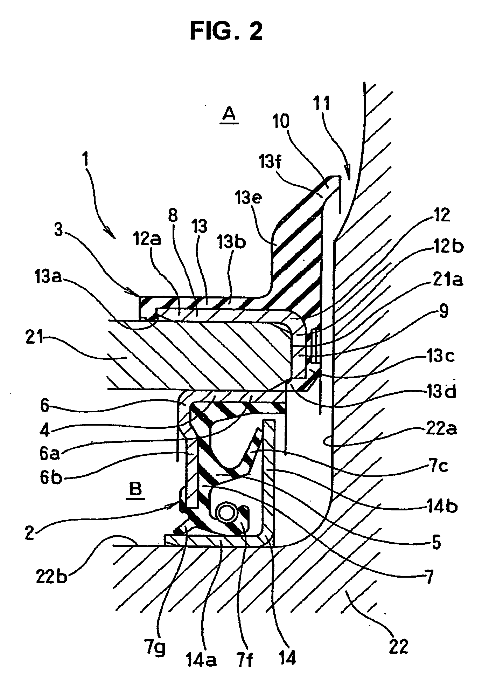

That is, as illustrated in Fig. 2 of the second example of the present invention, the inner peripheral side sealing member 2 in Fig. 2 includes a metal slinger 14 fixed at an outer periphery of the rotary shaft 22 as one of the constitution members, and the seal lip part 5 is slidably tight contacted with the slinger 14.

The slinger 14 integrally includes a cylindrical part 14a fitted to the peripheral face part 22b of the rotary shaft 22, and a flange part 14b which is integrally formed with the end part in one axial direction of the cylindrical part 14a toward an outer radial direction. Further, the metal ring 6 integrally includes a cylindrical part 6a fitted to the inner peripheral face of the outer race 21, and a flange part 6b which is integrally formed with the end part in another axial direction of the cylindrical part 6a toward an inner radial direction. Further, the rubber like elastic body 7 includes the fitted part 7b fitted to the inner peripheral face of the cylindrical part 6a of the metal ring 6, and fitted to the end face and the inner peripheral end part of the flange part 6b. The fitted part 7b is integrally formed with a first seal lip (side lip) 7c which is slidably tight contacted with an inner side end face of the flange part 14b of the slinger 14 so as to seal the flange part 14b, a second seal lip (main radial lip) 7f which is slidably tight contacted with an outer peripheral face of the cylindrical part 14a of the slinger 14 so as to seal the cylindrical part 14a, a third seal lip (sub radial lip) 7g. The first and second seal lips 7c and 7f are directed toward the outer side A of the bearing so as to mainly seal the dusts. The third seal lip 7g is directed toward the inner side B of the bearing so as to seal the grease.

Therefore, in the second embodiment, the slinger 14 corresponds to the relative rotation member described in the aspects of the invention. In addition, the other constitutions and the function effects of the second example are similar to those of the first example.

### Third example

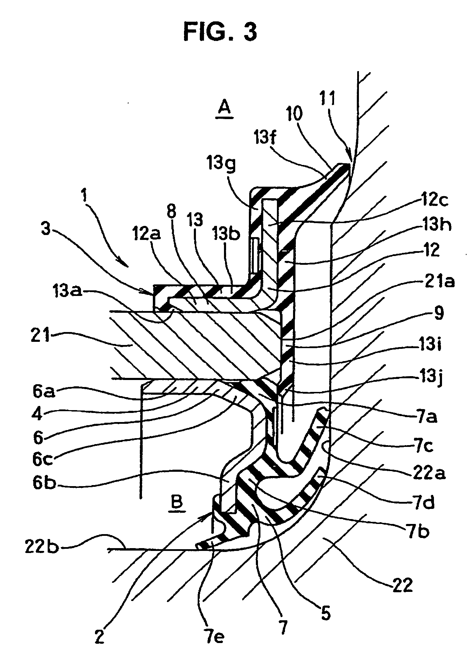

Fig. 3 is a cross-sectional view of main parts of a sealing device according to a third example of the present invention. The third example is according to the inventions described in the first, second, fourth and fifth aspects. In this example, the inner peripheral side sealing member 2 and the outer peripheral side sealing member 3 are constituted as follows.

The inner peripheral side sealing member 2 has constitution similar to that of the above-described first example as illustrated in the drawings, so that same codes are used, and descriptions are omitted.

On the other hand, the outer peripheral side sealing member 3 integrally includes a fixed part 8 fixed at the outer race 21, an end face rust-preventive seal part 9 for covering the axial end face 21a of the outer race 21, and a seal lip part 10 which is provided on the outer peripheral side of the end face rust-preventive seal part 9 and assembled with the rotary shaft 22 so as to form the seal 11, as constitution elements. Further, the outer peripheral side sealing member 3 includes a metal ring 12 fitted on the outer race 21 and a rubber like elastic body 13 fitted to the metal ring 12, as constitution members.

The metal ring 12 integrally includes a cylindrical part 12a fitted on an outer peripheral face of the outer race 21 and a flange part 12c which is integrally formed with an end part in one axial direction of the cylindrical part 12a toward an outer radial direction.

The rubber like elastic body 13 integrally includes a stationary seal part 13a which is fitted to an end part in another axial direction of the cylindrical part 12a of the metal ring 12 and tight contacted with the outer peripheral face of the outer race 21 so as to seal the cylindrical part 12a, a fitted part 13b fitted to the outer peripheral face of the cylindrical part 12a of the metal ring 12, a fitted part 13g fitted to an end face in another axial direction and an outer peripheral end part of the flange part 12c of the metal ring 12, and a fitted part 13h fitted to the end face in another axial direction of the flange part 12c. Further, the fitted part 13h is integrally formed with an extension part 13i from an inner peripheral end part thereof toward an inner radial direction. The inner peripheral end part of the extension part 13i is integrally formed with a lip shaped tight contacted seal part 13j which is tight contacted with the axial end face of the rubber like elastic body 7 in the inner peripheral side sealing member 2 so as to seal the extension part 13i. When the tight contacted seal part 13j is tight contacted with the axial end face of the rubber like elastic body 7 in the inner peripheral side sealing member 2, the extension part 13i covers the whole of the axial end face 21a of the outer race 21. Further, the fitted part 13h is integrally formed with a lip part 13f in a slant direction from the outer peripheral end part of the fitted part 13h and toward the direction of the axial end face part 22a of the rotary shaft 22.

The extension part 13i of the rubber like elastic body 13 covers the axial end face 21a of the outer race 21 so as to seal moisture, and constitutes an end face rust-preventive seal part 9 which is to suppress adhesion of moisture to the axial end face 21a of the outer race 21 to prevent occurrence of rusting of the axial end face 21a. Further, the seal lip part 10 or the lip part 13f is not contacted with but provided close to the axial end face part 22a of the rotary shaft 22, so as to constitute a labyrinth seal 11 which is a non-contact type seal.

The above-described sealing device 1 is used as the hub seal as described above, and for sealing foreign matters such as muddy water or dusts in the bearing external part A so as not to invade into the bearing internal part B. Further, the sealing device 1 has the following function effects with the above-described constitution.

The above-described sealing device 1 is formed by assembling the inner peripheral side sealing member 2 and the outer peripheral side sealing member 3. The outer peripheral side sealing member 3 is fitted on the outer peripheral side of the outer race 21, covers the whole face of the axial end face 21a of the outer race 21 at the end face rust-preventive seal part 9, and is directly tight contacted with the inner peripheral side sealing member 2 at the tight contacted seal part 13j. Further, the labyrinth seal 11 is formed with the seal lip part 10 or the lip part 13f between the outer peripheral side sealing member 3 and the axial end face part 22a of the rotary shaft 22. Therefore, the axial end face 21a of the outer race 21 is covered with the end face rust-preventive part 9, and a part between the outer peripheral side sealing member 3 and the inner peripheral side sealing member 2 is directly sealed by the tight contacted seal part 13j, so as to suppress adhesion of moisture to the axial end face 21a. Thus, occurrence of rusting of the axial end face 21a can be prevented. Further, the labyrinth seal 11 is formed with the seal lip part 10 or the lip part 13f between the outer peripheral side sealing member 3 and the axial end face part 22a of the rotary shaft 22, and acts as a primary seal. So, the sealing device 1 can have the constitution in which external moisture hardly invades. When moisture hardly invades, occurrence of rusting can be more effectively prevented, and the dust seal function which is the original function of the sealing device 1 can be enhanced. Therefore, the sealing device 1 having the function effects of the desired objective can be provided.

In addition, in the above-described third example, the end face rust-preventive seal part 9 is constituted by only the rubber like elastic body 13. However, the end face rust-preventive seal part 9 can be constituted by assembling the metal ring 12 with the rubber like elastic body 13, for example, by providing an inner directed flange at the metal ring 12. Further, the seal lip part 10 or the lip part 13f is assembled with the rotary shaft 22 so as to constitute the non-contact type labyrinth seal 11. However, a contact type (a sliding type) seal can be constituted.

### Fourth Example

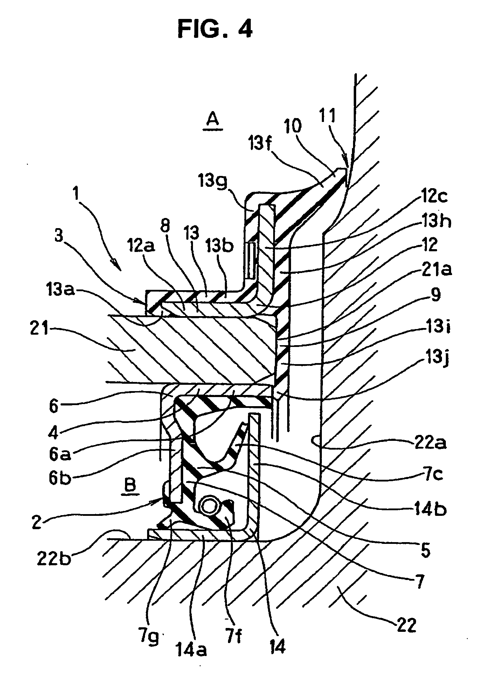

Further, as illustrated in Fig. 4 of a fourth example of the present invention, the inner peripheral side sealing member 2 can include a slinger 14 fixed on a rotary shaft 22, like the second example. In this case, a tight contacted seal part 13j is tight contacted with an axial end face part of a metal ring 6 or a rubber like elastic body 7 in the inner peripheral side sealing member 2.

Further, the device can include a constitution in which an end face rust-preventive seal part 9 and a tight contacted seal part 13j are not provided at an outer peripheral side sealing member 3 but provided at an inner peripheral side sealing member 2, although this constitution is not illustrated in the drawings.

### Fifth Example

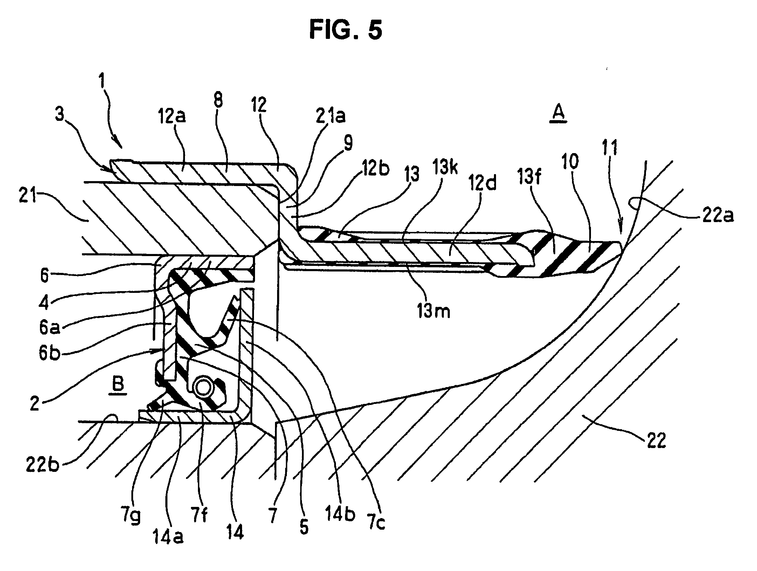

Fig. 5 is a cross sectional view of main parts of a sealing device 1 according to a fifth example of the present invention. This example is according to the inventions described in the first, second and fourth aspects. In this example, an inner peripheral side sealing member 2 and an outer peripheral side sealing member 3 are constituted as follows.

The inner peripheral side sealing member 2 is constituted similar to the second example as illustrated in the drawings, so that same codes are added, and descriptions are omitted.

On the other hand, the outer peripheral side sealing member 3 integrally includes a fixed part 8 fixed at an outer race 21, an end face rust-preventive seal part 9 for covering an axial end face 21a of the outer race 21, and a seal lip part 10 which is provided on the outer peripheral side of the end face rust-preventive seal part 9 and assembled with the rotary shaft 22 so as to form a seal 11, as main constitution components. Further, the outer peripheral side sealing member 3 includes a metal ring 12 fitted on the outer peripheral side of the outer race 21 and a rubber like elastic body 13 fitted to the metal ring 12, as constitution parts.

The metal ring 12 integrally includes a cylindrical part (an outer peripheral cylindrical part) 12a fitted on an outer peripheral face of the outer race 21 and a flange part 12b which is integrally formed with an end part in one axial direction of the cylindrical part 12a toward an inner radial direction. Further, a cylindrical extension part (an inner peripheral cylindrical part) 12d is integrally formed with an inner peripheral end part of the flange part 12b toward one axial direction. The flange part 12b covers the axial end face 21a of the outer race 21, so as to have a radial length capable of covering the axial end face 21a of the outer race 21. The extension part 12d has a longer axial length than that of the cylindrical part 12a.

The rubber like elastic body 13 includes an outer peripheral fitted part 13k fitted to an outer peripheral face of the extension part 12d of the metal ring 12 and an inner peripheral fitted part 13m fitted to an inner peripheral face of the extension part 12d. A lip part 13f is integrally formed with a top end part of the extension part 12d toward one axial direction between the both fitted parts 13k and 13m.

The flange part 12b of the metal ring 12 covers the axial end face 21a of the outer race 21 so as to seal moisture, and constitutes the end face rust-preventive seal part 9 to prevent adhesion of moisture to the axial end face 21a of the outer race 21 so as to prevent occurrence of rusting on the axial end face 21a. Further, a seal lip part 10 or a lip part 13f is slidably tight contacted with an axial end face part 22a of the rotary shaft 22, so as to constitute a contact type seal 11.

The sealing device 1 having the above-described constitution is used as a hub seal as described above, and is for sealing foreign matters such as muddy water, dusts or the like of a bearing external part A so as not to invade into a bearing internal part B. Further, the sealing device 1 has the following function effects with the above-described constitution.

The above-described sealing device 1 is formed by assembling the inner peripheral side sealing member 2 with the outer peripheral side sealing member 3. The outer peripheral side sealing member 3 is fitted on the outer peripheral side of the outer race 21, and the whole face of the axial end face 21a of the outer race 21 is covered with the end face rust-preventive seal part 9. Further, the contact type seal 11 is formed with the seal lip part 10 or the lip part 13f between the outer peripheral side sealing member 3 and the axial end face part 22a of the rotary shaft 22. Therefore, the axial end face 21a of the outer race 21 is covered with the end face rust-preventive part 9, so as to suppress adhesion of moisture to the axial end face 21a. Thus, occurrence of rusting on the axial end face 21a can be prevented. Further, the contact type seal 11 is formed with the seal lip part 10 or the lip part 13f between the seal lip part 10 or the lip part 13f and the axial end face part 22a of the rotary shaft 22 so as to act as a primary seal. Thus, the sealing device 1 in which external moisture hardly invades into a bearing can be constituted. When moisture hardly invades, occurrence of rusting can be more effectively prevented, and the dust seal function which is the original function of the sealing device 1 can be enhanced. Therefore, the sealing device 1 having the function effects of the desired objective can be provided.

In addition, in the above-described fifth example, the end face rust-preventive seal part 9 is constituted with only the metal ring 12. However, the end face rust-preventive seal part 9 can be constituted by assembling the metal ring 12 with the rubber like elastic body 13, for example, fitting a part of the rubber like elastic body 13 to the flange part 12b of the metal ring 12. Further, the seal lip part 10 or the lip part 13f is assembled with the rotary shaft 22 so as to constitute the contact type seal 11. However, the non-contact type labyrinth seal can be constituted.

### Sixth Example

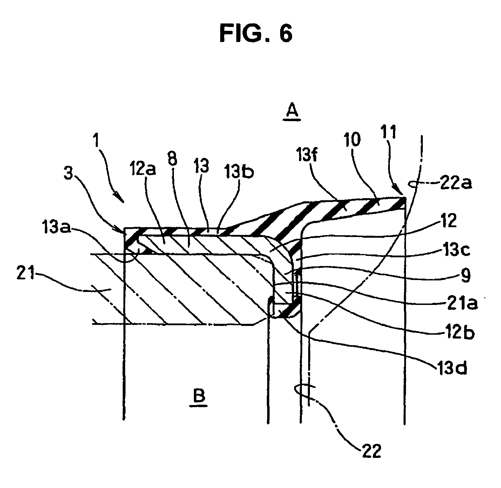

Fig. 6 is a cross sectional view of main parts of a sealing device 1 according to a sixth example of the present invention. This example is according to the inventions described in the first, second and fourth aspects. In this example, an inner peripheral sealing member (not illustrated in the drawings) and an outer peripheral side sealing member 3 are constituted as follows.

The inner peripheral side sealing member not illustrated in the drawings is constituted similar to the first or second example, so that descriptions are omitted.

On the other hand, the outer peripheral sealing member 3 integrally includes a fixed part 8 fixed at an outer race 21, an end face rust-preventive seal part 9 for covering an axial end face 21a of the outer race 21, and a seal lip part 10 which is provided on the outer peripheral side of the end face rust-preventive seal part9 and assembled with the rotary shaft 22 so as to form a seal 11, as main constitution components. Further, the outer peripheral side sealing member 3 includes a metal ring 12 fitted on the outer peripheral side of the outer race 21 and a rubber like elastic body 13 fitted to the metal ring 12, as constitution parts.

The metal ring 12 integrally includes a cylindrical part 12a fitted on an outer peripheral face of the outer race 21 and a flange part 12b which is integrally formed with an end part in one axial direction of the cylindrical part 12a toward an inner radial direction. Further, the flange part 12b covers the axial end face 21a of the outer race 21.

The rubber like elastic body 13 integrally includes a stationary seal part 13a which is fitted to an end part in another axial direction in the cylindrical part 12a of the metal ring 12 and tight contacted with the outer peripheral face of the outer race 21 so as to seal the outer race 21, an outer peripheral fitted part 13b fitted on an outer peripheral face of the cylindrical part 12a of the metal ring 12, an end face fitted part 13c fitted on an outer side end face of the flange part 12b of the metal ring 12, and a stationary seal part 13d which is fitted to an inner peripheral end part of the flange part 12b and directly tight contacted with an inner peripheral part of the axial end face 21a of the outer race 21 so as to seal the outer race 21. Further, a lip part 13f is integrally formed between the fitted parts 13b and 13c toward an axial end face part 22a of the rotary shaft 22, which is an outer aslant direction.

The flange part 12b of the metal ring 12, and the fitted part 13c and the stationary seal part 13d of the rubber like elastic body 13 cover the axial end face 21a of the outer race 21 so as to seal moisture, and constitute an end face rust-preventive seal part 9 to prevent adhesion of moisture to the axial end face 21a of the outer race 21 so as to prevent occurrence of rusting on the axial end face 21a. Further, the seal lip part 10 or the lip part 13f is not contacted with but provided close to the axial end face part 22a of the rotary shaft 22, so as to constitute labyrinth seal 11 which is a non-contact type seal by the seal lip part 10 or the lip part 13f and the axial end face part 22a.

The sealing device 1 having the above-described constitution is used as a hub seal as described above, and is for sealing foreign matters such as muddy water, dusts or the like of a bearing external part A so as not to invade into a bearing internal part B. Further, the sealing device 1 has the following operation effects with the above-described constitution.

The above-described sealing device 1 is formed by assembling the inner peripheral side sealing member 2 with the outer peripheral side sealing member 3. The outer peripheral side sealing member 3 is fitted on the outer peripheral side of the outer race 21, and the whole face of the axial end face 21a of the outer race 21 is covered with the end face rust-preventive seal part 9. Further, the labyrinth seal 11 is formed between the outer peripheral side sealing member 3 and the axial end face part 22a of the rotary shaft 22 with the seal lip part 10 or the lip part 13f. Therefore, the axial end face 21a of the outer race 21 is covered with the end face rust-preventive part 9, so as to suppress adhesion of moisture to the axial end face 21a. Thus, occurrence of rusting on the axial end face 21a can be prevented. Further, the labyrinth seal 11 is formed with the seal lip part 10 or the lip part 13f between the seal lip part 10 or the lip part 13f and the axial end face part 22a of the rotary shaft 22, so as to act as a primary seal. Thus, the sealing device 1 in which external moisture hardly invades into a bearing can be constituted. When the moisture hardly invades, occurrence of rusting can be more effectively prevented, and the dust seal function which is the original function of the sealing device 1 can be enhanced. Therefore, the sealing device 1 having the function effects of the desired objective can be provided.

In addition, in the above-described sixth example, the end face rust-preventive seal part 9 is constituted by assembling the metal ring 12 with the rubber like elastic body 13. However, the end face rust-preventive seal part 9 can be constituted with any one of the metal ring 12 and the rubber like elastic body13. Further, the seal lip part 10 or the lip part 13f is assembled with the rotary shaft 22 so as to constitute the non-contact type labyrinth seal 11. However, the contact type seal can be constituted.

### Seventh Example

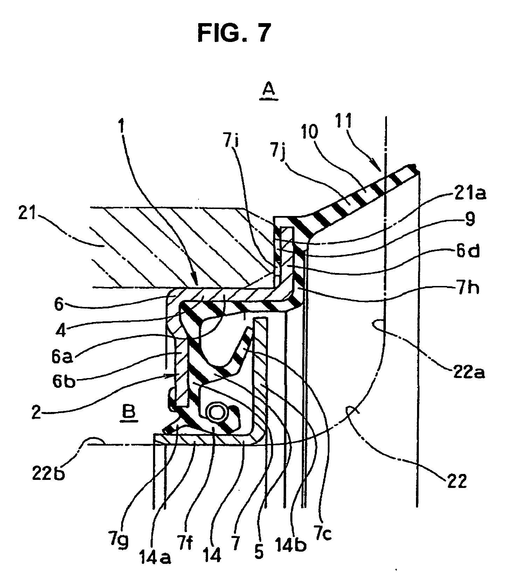

Fig. 7 is a cross sectional view of main parts of a sealing device 1 according to a seventh example of the present invention. This example is according to the inventions described in the first, second and sixth aspects. The sealing device 1 according to this example includes only an inner peripheral side sealing member 2, without having an outer peripheral side sealing member. The inner peripheral side sealing member 2 is constituted as follows.

The inner peripheral side sealing member 2 integrally includes a fixed part 4 fixed at an outer race 21, a seal lip part 5 which is provided on the inner peripheral side of the fixed part 4 and slidably tight contacted with a slinger 14 on the rotary shaft 22 side, an end face rust-preventive seal part 9 for covering an axial end face 21a of the outer race 21, and a seal lip part 10 which is provided on the outer peripheral side of the end face rust-preventive seal part 9 and assembled with the rotary shaft 22 so as to form a seal 11, as constitution components. Further, the inner peripheral side sealing member 3 includes a metal ring 6 fitted on the inner peripheral side of the outer race 21, a rubber like elastic body 7 fitted to the metal ring 6, and a slinger 14 fitted on the outer peripheral side of the rotary shaft 22, as constitution parts.

The slinger 14 integrally includes a cylindrical part 14a fitted to a peripheral face part 22b of the rotary shaft 22 and a flange part 14b which is integrally formed with an end part in one axial direction of the cylindrical part 14a toward an outer radial direction.

The metal ring 6 integrally includes a cylindrical part 6a fitted on an inner peripheral face of the outer race 21 and an inward flange part 6b which is integrally formed with an end part in another axial direction of the cylindrical part 6a toward an inner radial direction. Further, an outward flange part 6d is integrally formed with an end part in one axial direction of the cylindrical part 6a toward an outer radial direction. The outward flange part 6d covers the axial end face 21a of the outer race 21, so as to have a radial length capable of covering the axial end face 21a.

The rubber like elastic body 7 includes a fitted part 7b fixed on an inner peripheral face of the cylindrical part 6a of the metal ring 6 and at an end face and inner peripheral end face of the inward flange part 6b. The fixed part 7b is integrally formed with a first seal lip (a side lip) 7c which is slidably tight contacted with an inner side end face of the flange part 14b of the slinger 14 so as to seal the flange part 14b, a second seal lip (a main radial lip) 7f which is slidably tight contacted with an outer peripheral face of the cylindrical part 14a of the slinger 14 so as to seal the cylindrical part 14a, and a third seal lip (sub radial lip) 7g. The first and second seal lips 7c and 7f are directed toward an outer side A of a bearing so as to mainly seal dusts. The third seal lip 7g is directed toward an inner side B of the bearing so as to mainly seal grease. Further, the rubber like elastic body 7 is integrally formed with a fitted part 7h which is fitted on an outer side end face (an end face at the opposite side of the outer race) and an outer peripheral end part of the outward flange part 6d of the metal ring 6, and a fitted part 7i fitted on an inner side end face (an end face at the outer race side) of the outward flange part 6d. Further, an outer peripheral end part of the fitted part 7h is integrally formed with a lip part 7j toward an axial end face part 22a of the rotary shaft 22, which is an outer aslant direction.

The outward flange part 6d of the metal ring 6 and the fitted parts 7h and 7i of the rubber like elastic body 7 seals moisture by covering the axial end face 21a of the outer race 21, so as to constitute an end face rust-preventive seal part 9 to prevent adhesion of moisture to the axial end face 21a of the outer race 21 so as to prevent occurrence of rusting on the axial end face 21a. Further, a seal lip part 10 or a lip part 13f is slidably tight contacted with the axial end face part 22a of the rotary shaft 22, so as to constitute a contact type seal 11.

The above-described sealing device 1 is used as the hub seal as described above, and for sealing foreign matters such as muddy water, dusts or the like of the bearing external part A so as not to invade into the bearing internal part B. Further, the sealing device 1 has the following operation effects with the above-described constitution.

In the above-described sealing device, the inner peripheral side sealing member 2 covers the whole face of the axial end face 21a of the outer race 21 by the end face rust-preventive seal part 9, and the contact type seal 11 is constituted between the inner peripheral side sealing member 2 and the axial end face part 22a of the rotary shaft 22 by the seal lip part 10 or the lip part 13f. Therefore, since the axial end face 21a of the outer race 21 is covered with the end face rust-preventive seal part 9, adhesion of moisture to the axial end face 21a can be suppressed, and thus occurrence of rusting on the axial end face 21a can be prevented. Further, the contact type seal 11 is constituted between the inner peripheral side sealing member 2 and the axial end face part 22a of the rotary shaft 22 by the seal lip part 10 or the lip part 13, so as to act as a primary seal. Thus, the sealing device 1 in which external moisture hardly invades can be constituted. When moisture hardly invades, occurrence of rusting can be more effectively prevented, and the dust seal function which is the original function of the sealing device 1 can be enhanced. Therefore, the sealing device 1 having the function effects of the desired objective can be provided.

In addition, in the above-described seventh example, the end face rust-preventive seal part 9 is constituted by assembling the metal ring 6 with the rubber like elastic body 7. However, the end face rust-preventive seal part 9 can be constituted with any one of the metal ring 6 and the rubber like elastic body 7. Further, the seal lip part 10 or the lip part 13f is assembled with the rotary shaft 22 so as to constitute the contact type seal 11. However, a non-contact type labyrinth seal can be constituted. Furthermore, the slinger 14 can be omitted, that is, a seal lip part similar to the seal lip part 5 of the above-described first example can be used.

### Eighth Example

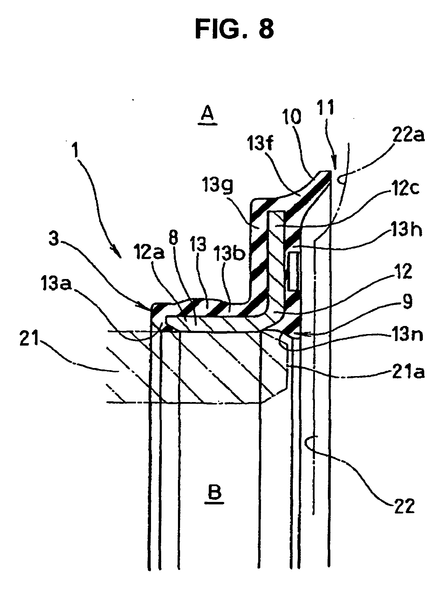

Fig. 8 is a cross sectional view of main parts of a sealing device 1 according to an eighth example of the present invention. This example is according to the inventions described in the first, third and seventh aspects. In this example, an inner peripheral side sealing member (not illustrated in the drawings) and an outer peripheral side sealing member 3 are constituted as follows.

The inner peripheral side sealing member not illustrated in the drawings is similar to that in the first example and the second example, so that descriptions are omitted.

On the other hand, the outer peripheral sealing member 3 integrally includes a fixed part 8 fixed at an outer race 21, an end face rust-preventive seal part 9 extended in a hood shape on the outer peripheral side of an axial end face 21a of the outer race 21, and a seal lip part 10 which is provided on the outer peripheral side of the end face rust-preventive seal part 9 and is assembled with the rotary shaft 22 so as to from a seal 11, as constitution components. Further, the outer peripheral sealingmember 3 includes ametal ring 12 fitted on the outer peripheral side of the outer race 21 and a rubber like elastic body 13 fitted to the metal ring 12, as constitution parts.

The metal ring 12 integrally includes a cylindrical part 12a fitted on an outer peripheral face of the outer race 21 and a flange part 12c which is integrally formed with an end part in one axial direction of the cylindrical part 12a toward an outer radial direction.

The rubber like elastic body 13 integrally includes a stationary seal part 13a which is fitted to an end part in another axial direction in the cylindrical part 12a of the metal ring 12 and tight contacted with an outer peripheral face of the outer race 21 so as to seal the outer race 21, a fitted part 13b fitted on an outer peripheral face of the cylindrical part 12a of the metal ring 12, a fitted part 13g fitted on an end face in another axial direction and on an outer peripheral end part of the flange part 12c of the metal ring 12, and a fitted part 13h fitted on an end face in one axial direction of the flange part 12c. A hood part 13n constituting the end face rust-preventive seal part 9 is integrally formed with an inner peripheral end part of the fitted part 13h. The hood part 13n is formed to have an approximately cylindrical face, and to have an inclined face having a diameter which is gradually reduced toward one axial direction from another axial direction of the inner peripheral face thereof. Further, the hood part 13n is provided on the outer peripheral side of the axial end face 21a of the outer race 21 while projecting toward one axial direction than the axial end face 21a, so as to cover the axial end face 21a, which is a face to be protected, like a hood although it is not contacted with the axial end face 21a. Thus, moisture hardly adheres to the axial end face 21a. Furthermore, the fitted part 13h is integrally formed with a lip part 13f toward the direction of an axial end face part 22a of the rotary shaft 22, which is an outer aslant direction from an outer peripheral end part thereof.

The hood part 13n of the rubber like elastic body 13 seals moisture by extending in a hood shape on the outer peripheral side of the axial end face 21a of the outer race 21, so as to constitute an end face rust-preventive seal part 9 to prevent adhesion of moisture to the axial end face 21a of the outer race 21 and occurrence of rusting on the axial end face 21a. Further, the seal lip part 10 or the lip part 13f is not contacted with but provided close to the axial end face part 22a of the rotary shaft 22, so as to constitute a non-contact type labyrinth seal 11.

The above-described sealing device 1 is used as the hub seal as described above, and for sealing foreign matters such as muddy water, dusts or the like of the bearing external part A so as not to invade into the bearing internal part B. Further, the sealing device 1 has the following operation effects with the above-described constitution.

The above-described sealing device 1 is formed by assembling the inner peripheral side sealing member with the outer peripheral side sealing member 3. The outer peripheral side sealing member 3 is fitted on the outer peripheral side of the outer race 21, and the whole periphery of the axial end face 21a of the outer race 21 is covered in a hood shape with the end face rust-preventive seal part 9. Further, the labyrinth seal 11 is constituted between the outer peripheral side sealing member 3 and the axial end face part 22a of the rotary shaft 22 by the seal lip part 10 or the lip part 13f. Therefore, since the axial end face 21a of the outer race 21 is covered in a hood shape by the end face rust-preventive seal part 9, adhesion of moisture to the axial end face 21a can be suppressed, and thus occurrence of rusting on the axial end face 21a can be prevented. Further, the labyrinth seal 11 is constituted between the outer peripheral side sealing member 3 and the axial end face part 22a by the seal lip part 10 or the lip part 13f, so as to act as a primary seal. Thus, the sealing device 1 in which external moisture hardly invades can be constituted. When moisture hardly invades, occurrence of rusting can be more effectively prevented, and the dust seal function which is the original function of the sealing device 1 can be enhanced. Therefore, the sealing device 1 having the function effects of the desired objective can be provided.

In addition, in the above-described eighth example, the end face rust-preventive seal part 9 is constituted with the rubber like elastic body 13. However, the end face rust-preventive seal part 9 can be constituted with the metal ring 12, or an assembly of the rubber like elastic body 13 and metal ring 12. Further, the seal lip part 10 or the lip part 13f is assembled with the rotary shaft 22 so as to constitute the non-contact type labyrinth seal 11. However, a contact type (a sliding type) seal can be constituted.

### Ninth Example

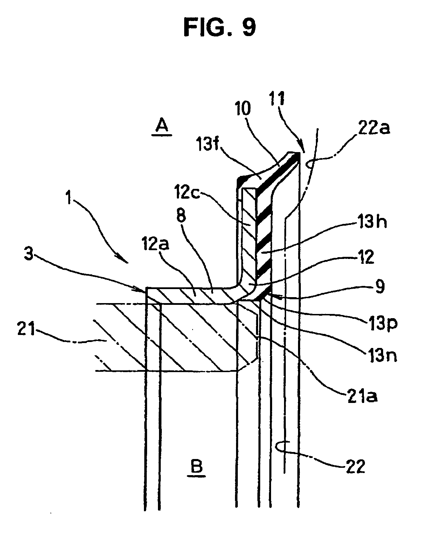

Further, a shape of the inner peripheral face of the hood part 13n can be a cylindrical shape having a chamfer 13p as illustrated in Fig. 9 of the ninth example, or a straight cylindrical shape in the axial direction without having a chamfer.

### Tenth Example

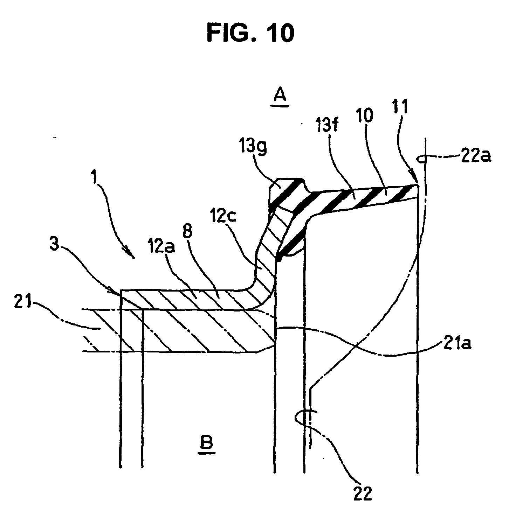

Fig. 10 is a cross sectional view of main parts of a sealing device 1 according to a tenth example of the present invention. This example is according to the invention described in the eighth aspect. In this example, an inner peripheral side sealing member (not illustrated in the drawings) and an outer peripheral side sealing member 3 can be constituted as follows.

The inner peripheral side sealing member not illustrated in the drawings is similar to that in the first example and the second example, so that descriptions are omitted.

On the other hand, the outer peripheral side sealing member 3 integrally includes a fixed part 8 fixed at an outer race 21 and a seal lip part 10 which is provided at further outer peripheral side than the axial end face 21a of the outer race 21 and assembled with a rotary shaft 22 so as to form a seal 11, as constitution components. Further, the outer peripheral side sealing member 3 includes a metal ring 12 fitted on the outer peripheral side of the outer race 21 and a rubber like elastic body 13 fitted to the metal ring 12, as constitution parts.

The metal ring 12 integrally includes a cylindrical part 12a fitted on an outer peripheral face of the outer race 21 and a flange part 12c which is integrally formed with an end part in one axial direction of the cylindrical part 12a toward an outer radial direction.

The rubber like elastic body 13 includes a fitted part 13q fitted to an outer peripheral end part of the flange part 12c of the metal ring 12. The fitted part 13q is integrally formed with a lip part 13f toward an axial end face part 22a of the rotary shaft 22 in one axial direction.

The seal lip part 10 or the lip part 13f is not contacted with but provided close to the axial end face part 22a of the rotary shaft 22, so as to constitute a labyrinth seal 11 which is a non-contact type seal.

The above-described sealing device 1 is used as the hub seal as described above, and for sealing foreign matters such as muddy water, dusts or the like of the bearing external part A so as not to invade into the bearing internal part B. Further, the sealing device 1 has the following operation effects with the above-described constitution.

The above-described sealing device 1 is formed by assembling the inner peripheral side sealing member with the outer peripheral side sealing member 3. The outer peripheral side sealing member 3 includes the seal lip part 10, and the seal lip part 10 is assembled with the rotary shaft 22 so as to perform a seal function. So, adhesion of moisture to the axial end face 21a of the outer race 21 can be suppressed. Therefore, occurrence of rusting on the axial end face 21a of the outer race 21 can be effectively prevented, so that deterioration of a fixedly fitted part (the cylindrical part of the metal ring) of the inner peripheral side sealing member due to rusting can be prevented, and the slide movement wear of the seal lip can be also prevented. Furthermore, the sealing device 1 is constituted with only the fixed part 8 and the seal lip part 10 as the constitution components. Thus, the sealing device 1 having a simple structure can be provided.

## Claims

1. A sealing device for sealing between an outer race (21) of a bearing part in a wheel suspension system for a motor vehicle and a rotary shaft (22) having an axial end face part (22a) opposed to an axial end face (21a) of the outer race (21), the device (1) comprising:
an outer peripheral side sealing member (3) provided on the outer peripheral side of the outer race (21),
wherein the outer peripheral side sealing member (3) integrally comprises:
a fixed part (8) fixed on the outer peripheral side of the outer race (21);
an end face rust-preventive seal part (9) for covering an axial end face (21a) of the outer race (21); **characterized by**
an outer peripheral side seal lip part (10) provided on the outer peripheral side of the end face rust-preventive seal part (9) adapted to extend outwards toward the axial end face part (22a) of the rotary shaft (22) so as to perform a seal function.

2. The sealing device according to claim 1 further comprising:
an inner peripheral side sealing member (2) provided on the inner peripheral side of the outer race (21),
wherein the outer peripheral side sealing member (3) integrally further comprises:
an outer peripheral side seal lip part (10) assembled with a rotary shaft (22) so as to perform a seal function,
wherein the inner peripheral side sealing member (2) integrally comprises:
a fixed part (4) fixed on the inner peripheral side of the outer race (21); and
an inner peripheral side seal lip part (5) provided on the outer peripheral side of the end face rust-preventive seal part (9) adapted to extend outwards toward the axial end face part (22a) of the rotary shaft (22) so as to perform a seal function, and
wherein the end face rust-preventive seal part (9) being adapted to cover an axial end face (21a) of the outer race (21); and
a tight contacted seal part (13j) tight contacted with another sealing member so as to seal between the both sealing members.

3. The sealing device according to claim 1 further comprising:
an inner peripheral side sealing member (2) provided on the inner peripheral side of the outer race (21),
wherein the inner peripheral side sealing member (2) integrally comprises:
a fixed part (4) fixed on the inner peripheral side of the outer race (21);
an end face rust-preventive seal part (9) for covering an axial end face (21a) of the outer race (21).

4. The sealing device according to claim 1,
wherein the end face rust-preventive seal part (9) extends in a hood shape on the outer peripheral side of an axial end face (21a) of the outer race (21).

## Patentansprüche

1. Dichtvorrichtung zum Abdichten zwischen einem äußeren Laufring (21) eines Lagerteils in einem Radaufhängungssystem für ein Motorfahrzeug und einer sich drehenden Welle (22), die ein axiales Endflächenteil (22a) aufweist, das einer axialen Endfläche (21a) des äußeren Laufrings (21) gegenüberliegt, wobei die Vorrichtung (1) umfasst:
ein äußeres randseitiges Dichtelement (3), das an der äußeren Randseite des äußeren Laufrings (21) bereitgestellt ist,
wobei das äußere randseitige Dichtelement (3) einstückig umfasst:
ein festes Teil (8), das an der äußeren Randseite des äußeren Laufrings (21) befestigt ist;
ein Rost verhinderndes Dichtteil (9) der Endfläche zum Bedecken einer axialen Endfläche (21a) des äußeren Laufrings (21); **gekennzeichnet durch**
ein Dichtlippenteil (10) der äußeren Randseite, das an der äußeren Randseite des Rost verhindernden Dichtteil (9) der Endfläche bereitgestellt ist, und angepasst ist, sich zu dem axialen Endflächenteil (22a) der sich drehenden Welle (22) nach außen zu erstrecken, um eine Dichtfunktion zu erfüllen.

2. Dichtvorrichtung nach Anspruch 1, außerdem mit:
einem Dichtelement (2) der inneren Randseite, das an der inneren Randseite des äußeren Laufrings (21) bereitgestellt ist,
wobei das Dichtelement (3) der äußeren Randseite einstückig außerdem umfasst:
ein Dichtlippenteil (10) der äußeren Randseite, das mit einer sich drehenden Welle (22) zusammengebaut ist, um eine Dichtfunktion zu erfüllen,
wobei das Dichtelement (2) der inneren Randseite einstückig umfasst:
ein festes Teil (4), das an der inneren Randseite des äußeren Laufrings (21) befestigt ist; und
ein Dichtlippenteil (5) der inneren Randseite, das an der äußeren Randseite des Rost verhindernden Dichtteils (9) der Endfläche bereitgestellt ist, und angepasst ist, sich zu dem axialen Endflächenteil (22a) der sich drehenden Welle (22) nach außen zu erstrecken, um eine Dichtfunktion zu erfüllen, und
wobei das Rost verhindernde Dichtteil (9) der Endfläche angepasst ist, eine axiale Endfläche (21a) des äußeren Laufrings (21) zu bedecken; und
ein fest berührendes Dichtteil (13j), das fest mit einem anderen Dichtelement in Berührung ist, um zwischen den beiden Dichtelementen abzudichten.

3. Dichtgerät nach Anspruch 1, außerdem mit:
einem inneren randseitigen Dichtelement (2), das an der inneren Randseite des äußeren Laufrings (21) bereitgestellt ist,
wobei das innere randseitige Dichtelement (2) einstückig umfasst:
ein festes Teil (4), das an der inneren Randseite des äußeren Laufrings (21) befestigt ist;
ein Rost verhinderndes Dichtteil (9) der Endfläche, um eine axiale Endfläche (21a) des äußeren Laufrings (21) zu bedecken.

4. Dichtvorrichtung nach Anspruch 1,
wobei das Rost verhindernde Dichtteil (9) der Endfläche sich in einer haubenartigen Form an der äußeren Randseite einer axialen Endfläche (21a) des äußeren Laufrings (21) erstreckt.

## Revendications

1. Dispositif d'étanchéité destiné à assurer l'étanchéité entre un chemin de roulement extérieur (21) d'une partie de roulement dans un système de suspension de roue pour un véhicule à moteur et un arbre rotatif (22) ayant une partie de face d'extrémité axiale (22a) opposée à une face d'extrémité axiale (21a) du chemin de roulement extérieur (21), le dispositif (1) comprenant :
un élément d'étanchéité (3) côté périphérique extérieur prévu sur le côté périphérique extérieur du chemin de roulement extérieur (21),
où l'élément d'étanchéité (3) côté périphérique extérieur comprend solidairement :
une partie fixe (8) fixée sur le côté périphérique extérieur du chemin de roulement extérieur (21) ;
une partie d'étanchéité antirouille (9) de face d'extrémité pour recouvrir une face d'extrémité axiale (21a) du chemin de roulement extérieur (21) ; **caractérisé par**
une partie de lèvre d'étanchéité (10) côté périphérique extérieur prévue sur le côté périphérique extérieur de la partie d'étanchéité antirouille (9) de face d'extrémité adaptée pour s'étendre vers l'extérieur en direction de la partie de face d'extrémité axiale (22a) de l'arbre rotatif (22) de façon à assurer une fonction d'étanchéité.

2. Dispositif d'étanchéité selon la revendication 1 comprenant en outre :
un élément d'étanchéité (2) côté périphérique intérieur prévu sur le côté périphérique intérieur du chemin de roulement extérieur (21),
où l'élément d'étanchéité (3) côté périphérique extérieur comprend en outre solidairement :
une partie de lèvre d'étanchéité (10) côté périphérique extérieur assemblée à un arbre rotatif (22) de façon à assurer une fonction d'étanchéité ;
où l'élément d'étanchéité (2) côté périphérique intérieur comprend solidairement :
une partie fixe (4) fixée sur le côté périphérique intérieur du chemin de roulement extérieur (21) ; et
une partie de lèvre d'étanchéité (5) côté périphérique intérieur prévue sur le côté périphérique extérieur de la partie d'étanchéité antirouille (9) de face d'extrémité adaptée pour s'étendre vers l'extérieur en direction de la partie de face d'extrémité axiale (22a) de l'arbre rotatif (22) de façon à assurer une fonction d'étanchéité, et
où la partie d'étanchéité antirouille (9) de face d'extrémité étant adaptée pour recouvrir une face d'extrémité axiale (21a) du chemin de roulement extérieur (21) ; et
une partie d'étanchéité en contact étanche (13j) qui est en contact étanche avec un autre élément d'étanchéité de façon à assurer l'étanchéité entre les deux éléments d'étanchéité.

3. Dispositif d'étanchéité selon la revendication 1 comprenant en outre :
un élément d'étanchéité (2) côté périphérique intérieur prévu sur le côté périphérique intérieur du chemin de roulement extérieur (21),
où l'élément d'étanchéité (2) côté périphérique intérieur comprend solidairement :
une partie fixe (4) fixée sur le côté périphérique intérieur du chemin de roulement extérieur (21) ;
une partie d'étanchéité antirouille (9) de face d'extrémité pour recouvrir une face d'extrémité axiale (21a) du chemin de roulement extérieur (21).

4. Dispositif d'étanchéité selon la revendication 1,
dans lequel la partie d'étanchéité antirouille (9) de face d'extrémité s'étend en forme de capuchon sur le côté périphérique extérieur d'une face d'extrémité axiale (21a) du chemin de roulement extérieur (21).
